# EUROPÄISCHE PATENTSCHRIFT

(11) **EP 2 090 427 B1**
(45) Veröffentlichungstag und Bekanntmachung des Hinweises auf die Patenterteilung: **23.03.2016**
(21) Anmeldenummer: 09000918.4
(22) Anmeldetag: 23.01.2009
(51) Int. Cl.: B32B 17/10, C09K 21/02, C09K 21/14

(54) **Brandschutzverglasung**
Flame retardant glazing
Verrière ignifuge

(30) Priorität: 15.02.2008 DE 102008009484
(43) Veröffentlichungstag der Anmeldung: 19.08.2009
(73) Patentinhaber: Schott AG, 55122 Mainz (DE)
(72) Erfinder: Panzner, Gerrit, 07407 Rudolstadt (DE); Freitag, Rüdiger, 36433 Moorgrund/Etterwinden (DE); Fiedler, Hans-Joachim, 98693 Ilmenau (DE); Karschti, Thomas, 55257 Budenheim (DE)
(74) Vertreter: Herrmann, Jochen

(56) Entgegenhaltungen:
- DE-C1- 19 916 506
- US-A- 5 397 645

## Beschreibung

Die Erfindung betrifft eine Brandschutzverglasung mit wenigstens zwei Glaspaketen, die jeweils zumindest zwei zueinander parallele Glasscheiben aufweisen.

Herkömmliche Fenstergläser sind als Feuerschutzbarrieren ungeeignet, weil sie bei jeder stärkeren thermischen Belastung zerplatzen. Das Feuer und die entstehende Wärmestrahlung können sich ungehemmt ausbreiten. Der Grund dafür liegt in ihrem relativ hohen thermischen Ausdehnungskoeffizienten und ihrer relativ geringen Zugfestigkeit. Unter dem Begriff Brandschutzverglasungen werden Bauteile verstanden, die aus einem oder mehreren lichtdurchlässigen Systemen bestehen, die mit Halterungen und Dichtungen in einen Rahmen eingebaut sind.

Hinsichtlich ihrer Feuerwiderstandsklassen unterscheidet man EI- und E- Verglasungen. Durch die Angabe ihrer Feuerwiderstandsdauer in Minuten werden sie nach DIN EN 357 zusätzlich charakterisiert (z.B. EI 30; EI 90, E 30). E- Verglasungen verhindern für die entsprechende Zeit nur die Ausbreitung von Feuer und Rauch. EI -Verglasungen müssen zusätzlich den Durchtritt der Wärmestrahlung verhindern.

Für EI -Verglasungen sind heute kombinierte Systeme aus Brandschutzscheiben und Füllschichten zwischen den Scheiben üblich. Diese Füllschichten können sowohl organischer als auch anorganischer Natur sein oder eine Kombination aus beiden darstellen. Ihre Aufgabe ist zum einen die Verzögerung des Wärmedurchganges durch endotherme Prozesse wie z.B. Verdampfung in den Füllschichten, zum anderen die Bildung eines isolierenden Rückstandes wie z.B. Schaum, der gut am Glas anhaften sollte.

In mehreren Patenten (GB 1518958, GB 2199535, US 4451312, US 4626301, US 5766770) werden auf Wasserglas basierende Füllschichten mit organischen Zusätzen aus der Gruppe der mehrwertigen Alkohole beschrieben. Es kommen Natrium, Kalium und Lithium enthaltende Wasserglaslösungen mit unterschiedlichen SiO₂:M₂O - Verhältnissen (M steht für Alkali) zum Einsatz.

Zum Herstellen von EI-funktionalen Glaspaketen werden beispielsweise Lösungen auf die Glasscheibe aufgebracht und auf dieser bis zu einem gewissen Restwassergehalt getrocknet. Im Brandfall zerspringt die der Hitzeeinwirkung ausgesetzte Glasscheibe, während die beispielsweise aus Alkalisilikat bestehende Füllschicht unter Verdampfen des in ihr enthaltenen Wassers zu einer Schaumschicht aufgebläht wird, die den weiteren Wärmedurchgang verringert. Aus der Kombination des Kühleffektes durch das verdampfende Wasser und der isolierenden Wirkung des Schaumes resultiert die eigentliche Brandschutzfunktion.

Der EI-Brandwiderstand derartiger Aufbauten wird im Wesentlichen durch die Glasdicke, das heißt insbesondere durch die Anzahl der Glasscheiben/Füllschicht-Wechsellagen bestimmt. Brandschutzgläser der Klassifizierung ≥ EI 90 weisen Dicken im Bereich mehrerer Zentimeter auf.

Die Herstellung von Brandschutzgläsem der Klassifizierung ≥ EI 90 im klassischen Produktionsprozess ist außerordentlich aufwendig und fehleranfällig. Einerseits sind sehr hohe Glasdicken und Flächengewichte zu verarbeiten, was eine entsprechende Dimensionierung von Maschinen und Anlagen voraussetzt. Für die Fertigung von Produkten mit kleineren Abmessungen ist die Anlage überdimensioniert und im Gesamtbetrieb nicht wirtschaftlich.

Das größere Problem ist aber die Wahrscheinlichkeit des Auftretens von visuell wahrnehmbaren Fertigungsfehlern, wie Blasen, Schleiher, Einschlüsse etc. Im klassischen Produktionsprozess entstehen diese zwangläufig. Je mehr Glasscheiben/Alkalisilikatschicht-Wechsellagen für den Verbund verarbeit werden, desto schwieriger ist es, ein qualitativ hochwertiges Produkt in hoher Ausbeute zu erhalten. Die Ausschussrate steigt mit zunehmender Anzahl an Glasscheiben/Alkalisilikatschicht-Wechsellagen potentiell.

Verständlicherweise suchen Hersteller alternative Produktionsverfahren oder ein alternatives Produktdesign. Ein solches Produktdesign ist in WO2005/115746 A1 beschrieben. Hier wird eine Alkalisilikatschicht durch Laminierfolien aus PVB oder EVA ersetzt.

Der entscheidende Nachteil dieses Verfahren ist die Art des Verbundes. Die im klassischen Laminierprozess eingebrachten Folien sind hoch brennbar. Es ist offensichtlich kontraproduktiv, in ein Brandschutzglas eine eigene Brandlast hineinzutragen. Der Vorteil des einfachen Verbundes gut handhabbarer Teilpakete wird durch die sehr gut brennenden Verbundfolien teilweise eliminiert.

Ein weiterer Nachteil ist der klassische Laminierprozess, der hohe Temperaturen und hohe Drücke erfordert. Es besteht die Gefahr der thermischen Schädigung der Alkalisilikatschicht oder des schlechten Glasscheiben/Folienverbundes durch zu niedrige Verarbeitungstemperaturen. Darüber hinaus wird durch die benötigte aufwendige technische Anlage (u.a. Autoklav) die dezentrale Verarbeitung erheblich behindert.

Eine weitere Brandschutzverglasung ist aus der US 5,397,645 bekannt. Dieses Dokument zeigt bereits eine Brandschutzverglasung, die mehrere zueinander parallele Glasscheiben aufweist. Zwischen den Glasscheiben ist jeweils eine Schicht aus Natriumsilikat eingebracht. Die Scheiben wiederum sind durch eine Schicht bestehend aus Aluminiumphosphat verbunden. Die Scheiben bilden jeweils ein Glaspaket, das mit einem identisch aufgebauten zweiten Glaspaket über eine nicht brennbare Epoxydharzschicht verbunden sind.

Es ist Aufgabe der Erfindung, eine Brandschutzverglasung der eingangs erwähnten Art zu schaffen, die sowohl für industrielle Verarbeitungsgrößen als auch dezentral für kleine Kundenabmessungen wirtschaftlich herstellbar ist.

Diese Aufgabe wird gelöst mit einer Brandschutzverglasung mit wenigstens zwei Glaspaketen, die jeweils zumindest zwei zueinander parallele Glasscheiben aufweisen, wobei zwischen den Glasscheiben zumindest bereichsweise eine im Brandfall aufschäumenden Füllschicht, insbesondere eine Alkalisilikatschicht angeordnet ist, wobei die Glaspakete mit einem nichtbrennbaren, transparenten, organischen Kleber als Verbindungsschicht verbunden sind, und wobei die Verbindungsschicht als UV-härtender Kleber ausgebildet ist.

Die Verklebung erfolgt mit einem schwerentflammbaren bzw. nicht brennbaren organischen Klebstoff. Dieser kann vorteilhafterweise ein speziell auf den zu erwartenden UV-VIS-Einfall abgestimmtes Photoinitiatorensystem enthalten. Die Verklebung der Glaspakete kann im industriellen Maßstab in voller Fertigungsgröße von beispielsweise ca. 2 m x 3 m erfolgen, eine Verklebung in kleinen Abmessungen (Kundenmaße) ist ebenfalls möglich. Die Verklebung kann über einen Direktauftrag des Klebers auf ein Glaspaket (gegebenenfalls Überschussverarbeitung) ausgeführt werden. Nach dem Abdecken mit einem weiteren Glaspaket erfolgt der Verbund durch das Aushärten des Klebers mittels UV-Strahlung. Alternativ kann die Verklebung auch mit füllenden Verfahren erfolgen (Gießharzprozess).

Die eingesetzten Kleber sind durch brandhemmende Additive beziehungsweise über das Basismaterial so einzustellen, dass sich die Zwischenschicht im Brandfall nicht entzündet. Dies kann beispielsweise über die Beimengung von Phosphor Stickstoffverbindungen erreicht werden. Bevorzugterweise ist die Verbindungsschicht derart eingestellt, dass die Kombination aus Material und Schichtdicke ein Ausfließen von heißem Klebermaterialien im Brandfall (zum Beispiel aufgeschmolzener Zwischenschicht) verhindert.

Dies wird insbesondere bei Verbindungsschichtdicken von 0,3 mm bis 1,5 mm erreicht, wobei hohe Kapillarkräfte das Klebermaterial, insbesondere bei Schichtdicken im Bereich von 0,4 - 0,8 mm halten.

In einer weiteren bevorzugten Ausführungsform der Erfindung sind dem Kleber Additive beigemischt, welche unter Temperatureinwirkung gezielt die Verkohlung und frühzeitige Zersetzung der polymeren Verbindungsschicht fördern.

Die Erfindung geht von der Erkenntnis aus, dass mit dem nichtbrennbaren Klebstoff zum Verbinden einzelner EI-funktionaler Glaspakete eine bifunktionale Schicht eingebracht wird, die neben dem reinen Verbund auch einen zusätzlichen Brandwider stand liefert. Auf diese Weise lassen sich insbesondere Brandschutzverglasungen der Klassifizierung EI90 oder höher nach DIN EN 357 als Verklebung von Glaspaketen realisieren, ohne dass eine zusätzliche Brandlast eingebracht wird, die den Gesamtwirkungsgrad negativ beeinflusst. Die einzelnen Glaspakete lassen sich mit geringer Ausschussquote wirtschaftlich herstellen und anschließend unproblematisch verkleben, so dass eine effiziente Fertigung möglich wird.

Die problematische Aushärtung zwischen dicken UV-VIS-absorbierenden Glaspaketen, die notwendige Langzeitstabilität der Verklebung und letztendlich auch die thermische Schädigung der Alkalisilikatschicht durch die exotherme Reaktion des Klebers beim Aushärten wird insbesondere dann leicht beherrschbar, wenn vorgesehen ist, dass die Verbindungsschicht zwischen zwei endseitigen zueinander parallele beabstandeten Glasscheiben der miteinander verklebten Glaspakete angeordnet ist und dass die Schichtdicke der Verbindungsschicht 0,3 mm bis 3 mm beträgt.

Besonders langzeitstabile Verklebungen ergeben sich bevorzugt dann, wenn vorgesehen ist, dass die Schichtdicke der Verbindungsschicht 0,5 mm bis 0,8 mm beträgt.

Überraschenderweise hat sich gezeigt, dass bei Einsatz bestimmter Zwischenschicht-/ Schichtdickenkombinationen die erfindungsgemäße Brandschutzverglasungen ohne oben genannte Nachteile herstellen lassen.

Die erfindungsgemäßen Brandschutzverglasungen weisen gegenüber Folienlarninaten eine höhere Standzeit auf, sind einfach herzustellen und trotz der geringen Schichtendicken langzeitstabil.

Um bei der erfindungsgemäßen Brandschutzverglasung den Brandwiderstand weiter zu erhöhen, kann es vorgesehen sei, dass zwischen wenigstens zwei der Glasscheiben eine Funktionsschicht angeordnet ist. Diese Funktionsschicht kann insbesondere dergestalt sein, dass die Funktionsschicht von einer Scheibe aus chemisch oder thermisch vorgespanntem Glas, einer Scheibe aus Glaskeramik und/oder von organischen Polymeren gebildet ist. Auf diese Weise lassen sich zusätzlich spezielle mechanische Eigenschaften, beispielsweise Durchbruchhemmung nach DIN EN 356 oder Widerstandsfähigkeit gegen den Hose-Stream-Test der Brandschutzverglasung einstellen. Dadurch, dass die Funktionsschicht in die Verbindungsschicht eingeklebt ist, kann die Funktionsschicht einfach in die Brandschutzverglasung integriert werden.

Die Erfindung basiert auf dem Verkleben einzelner, insbesondere EI-funktionaler Glaspakete, die mindestens eine Glasschicht/Füllschicht-Wechsellage, vorzugsweise 3 bis 4 Glasschicht/Füllschicht-Wechsellagen, aufweisen. Diese Glaspakete sind einfach und in hoher Ausbeute herstellbar. Es können mehrere Glaspakete verklebt werden.

Eine besonders gute Brandschutzwirkung lässt sich erreichen, wenn vorgesehen ist, dass die Füllschichten Na-Silikate und/oder K-Silikate und/oder Li-Silikate aufweist beziehungsweise dass das Verhältnis von SiO₂ zu Alkalimetalloxid zwischen 1:1 bis 5:1 beträgt.

Besonders bewährt hat es sich bei der erfindungsgemäßen Brandschutzverglasung, wenn vorgesehen ist, dass die Füllschichten bis zu maximal 30 Gew% mehrwertige Alkohole und/oder unterschiedliche Zuckerarten aufweist.

Im Brandfall wird eine ausreichende Kühlwirkung infolge von Verdampfungsprozessen erreicht, wenn vorgesehen ist, dass die Füllschichten einen Wasseranteil von 10 Gew% bis 35 Gew% aufweisen. Diese Kühlwirkung unterstützt dann die Haltbarkeit der Kleberschicht im Brandfall.

Bevorzugterweise ist vorgesehen, dass die Dicke der Füllschichten 0,3 mm bis 5 mm beträgt und dass die Dicke der Glasscheiben zwischen 2,3 mm und 5 mm beträgt. Bei diesen Lagenstärken lässt sich die Verklebung zuverlässig, insbesondere UVaushärten.

Die Erfindung wird im Folgenden anhand von in den Zeichnungen dargstellten Ausführungsbeispiel näher erläutert.

Es zeigen:
- Fig. 1: in Seitendarstellung ein Glaspaket,
- Fig. 2: in Seitendarstellung zwei miteinander verbundene Glaspakete,
- Fig. 3: in Seitendarstellung drei miteinander verbundene Glaspakete und
- Fig. 4: in Seitendarstellung zwei miteinander verbundene Glaspakete, zwischen denen eine Funktionsschicht angeordnet ist.

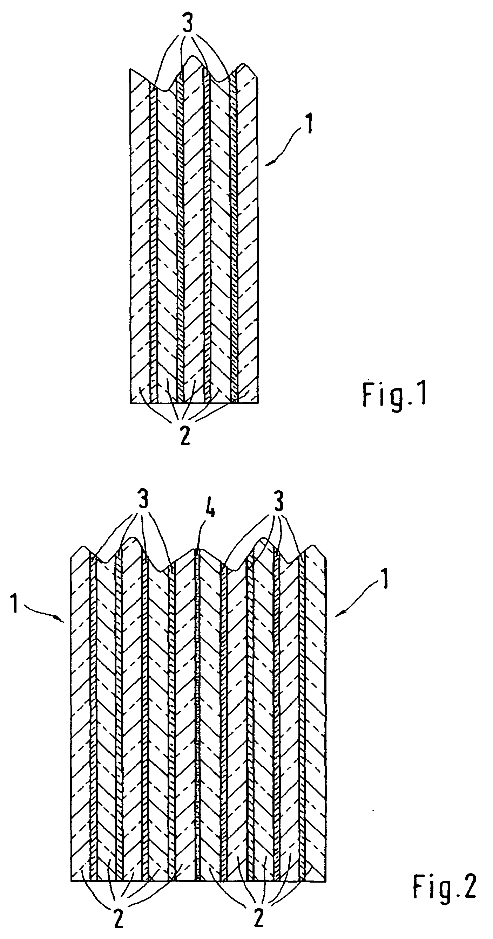

Fig. 1 stellt ein EI-funktionales Glaspaket 1 dar (Pyranova 45-S2.0, Schott Jenaer Glas GmbH), welches aus fünf Glasscheiben 2 und vier intumeszierenden Füllschichten 3 besteht. Derartige Aufbauten entsprechen üblicherweise der Klassifizierung EI 45.

Die Glasscheiben 2 sind zueinander parallel unter Einhaltung eines einheitlichen Teilungsabstandes beabstandet. Die Füllschichten 3 bestehen aus einem Alkalisilikatmaterial, nämlich einem organisch modifiziertem Alkaliwasserglas, das im Brandfall aufschäumt. Derartige Brandschutzverglasungen werden beispielsweise für Trennwände, Tür- und Fensterverglasungen eingesetzt.

Zwei dieser Glaspakete 1 werden durch Verklebung mittels einer Verbindungsschicht 4, die als modifiziertes PMMA-Gießharz ausgebildet ist, (DM 2775; Cytec GmbH) zu einer Brandschutzverglasung verbunden, wie dies die Fig. 2 zeigt. Dabei werden die Glaspakete 1 mit zwei ihrer endseitigen Glasscheiben 2 parallel unter Einhaltung eines Abstandsbereiches aneinandergelegt. Das Abstandsmaß beträgt vorliegend 0,4 mm.

Im Brandversuch nach DIN EN 1364 wird eine Feuerwiderstandszeit von > 90 min erreicht. Die Bestrahlungsprüfung nach DIN EN 12543-4 führt zu keiner Veränderung der Klebeschicht.

Im Klimawechseltest (-20/60°C, 8 h Zyklus über 1 Woche) wird die Verglasung nicht geschädigt.

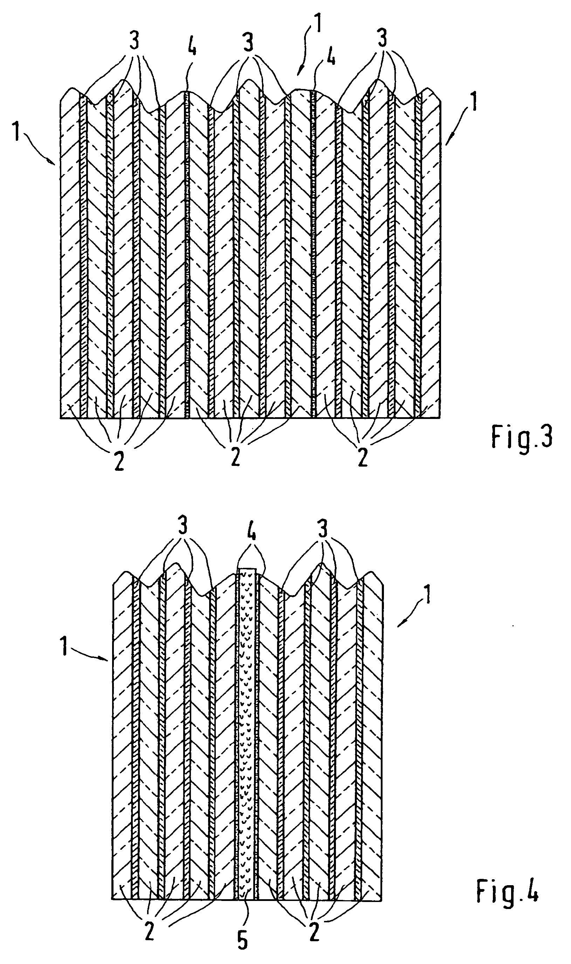

Bei dem Ausführungsbeispiel nach Fig. 3 sind drei Glaspakete 1 durch Verklebung mittels modifiziertem PMMA-Gießharz (UV T; Jenpolymers Ltd.) zu einer Brandschutzverglasung verklebt. Die Dicke der Verbindungsschicht 4 beträgt dabei 0,5 mm.

Im Brandversuch nach DIN EN 1364 wird eine Feuerwiderstandszeit von > 120 min erreicht. Die Bestrahlungsprüfung nach DIN EN 12543-4 führt zu keiner Veränderung der Klebschicht. Im Klimawechseltest (-20/60°C, 8 h Zyklus über 1 Woche) wird die Verglasung nicht geschädigt.

Gemäß einem Ausführungsbeispiel nach Fig. 4 werden zwei Glaspakete 1 gem. Fig. 1 (Pyranova 45-S2.0, Schott Jenaer Glas GmbH) durch Verklebung mittels modifiziertem PMMA-Gießharz als Verbindungsschicht 4 der Dicke 0,45 mm (UV T; Jenpolymers Ltd.) zu einer Brandschutzverglasung verbunden. In die Verbindungsschicht 4 ist eine Funktionsschicht 5 unmittelbar eingeklebt, die vorliegend von einer Glaskeramikscheibe (Pyran Crystal; Schott Jenaer Glas GmbH) gebildet ist.

Im Brandversuch nach DIN EN 1364 wird eine Feuerwiderstandszeit von > 100 min erreicht. Die unbeschädigte Glaskeramikscheibe widersteht nach dieser Brandbelastung einem Hose Stream Test (UL Standard 9). Die Bestrahlungsprüfung nach DIN EM 12543-4 führt zu keiner Veränderung der Klebschicht. Im Klimawechseltest (-20/60°C, 8 h Zyklus über 1 Woche) wird die Verglasung nicht geschädigt.

## Patentansprüche

1. Brandschutzverglasung mit wenigstens zwei Glaspaketen (1), die jeweils zumindest zwei zueinander parallele Glasscheiben (2) aufweisen, wobei zwischen den Glasscheiben (2) zumindest bereichsweise eine im Brandfall aufschäumende Füllschicht, insbesondere eine Alkalisilikatschicht (3) angeordnet ist,
wobei die Glaspakete (1) mit einem nichtbrennbaren, transparenten, organischen Kleber als Verbindungsschicht (4) verbunden sind, und
wobei die Verbindungsschicht (4) als UV-härtender Kleber ausgebildet ist.

2. Brandschutzverglasung nach Anspruch 1,
**dadurch gekennzeichnet,**
**dass** die Verbindungsschicht (4) zwischen zwei endseitigen zueinander parallel beabstandeten Glasscheiben (2) der miteinander verklebten Glaspakete (1) angeordnet ist und
**dass** die Schichtdicke der Verbindungsschicht 0,3 mm bis 3 mm beträgt.

3. Brandschutzverglasung nach Anspruch 2,
**dadurch gekennzeichnet,**
**dass** die Schichtdicke der Verbindungsschicht 0,5 mm bis 0,8 mm beträgt.

4. Brandschutzverglasung nach einem der Ansprüche 1 bis 3 ,
**dadurch gekennzeichnet,**
**dass** zwischen wenigstens zwei der Glasscheiben (2) eine Funktionsschicht (5) angeordnet ist.

5. Brandschutzverglasung nach Anspruch 4,
**dadurch gekennzeichnet,**
**dass** die Funktionsschicht (5) von einer Scheibe aus chemisch oder thermisch vorgespanntem Glas, einer Scheibe aus Glaskeramik und/oder von organischen Polymeren gebildet ist.

6. Brandschutzverglasung nach Anspruch 4 oder 5,
**dadurch gekennzeichnet,**
**dass** die Funktionsschicht (5) in die Verbindungsschicht (4) eingeklebt ist.

7. Brandschutzverglasung nach einem der Ansprüche 1 bis 6,
**dadurch gekennzeichnet,**
**dass** die Verbindungsschicht (4) aus organischen Polymeren besteht, bei denen im Brandfall der Zersetzungs- und Verkohlungsprozess dominiert.

8. Brandschutzverglasung nach einem der Ansprüche 1 bis 7,
**dadurch gekennzeichnet,**
**dass** die Füllschichten (3) Na-Silikate und/oder K-Silikate und/oder Li-Silikate aufweisen.

9. Brandschutzverglasung nach einem der Ansprüche 1 bis 8,
**dadurch gekennzeichnet,**
**dass** die Füllschichten (3) SiO₂ und Alkalimetalloxid enthalten, und dass das Verhältnis von SiO₂ zu Alkalimetalloxid zwischen 1:1 bis 5:1 beträgt.

10. Brandschutzverglasung nach einem der Ansprüche 1 bis 9,
**dadurch gekennzeichnet,**
**dass** die Füllschichten (3) bis zu maximal 30 Gew% . mehrwertige Alkohole und/oder unterschiedliche Zuckerarten aufweisen.

11. Brandschutzverglasung nach einem der Ansprüche 1 bis 10,
**dadurch gekennzeichnet,**
**dass** die Füllschichten (3) einen Wasseranteil von 10 Gew% bis 35 Gew% aufweisen.

12. Brandschutzverglasung nach einem der Ansprüche 1 bis 11,
**dadurch gekennzeichnet,**
**dass** die Dicke der Füllschichten (3) 0,3 mm bis 5 mm beträgt.

13. Brandschutzverglasung nach einem der Ansprüche 1 bis 12,
**dadurch gekennzeichnet,**
**dass** die Dicke der Glasscheiben (2) zwischen 2,3 mm und 5 mm beträgt.

## Claims

1. Fire protection glazing having at least two glass packets (1) which each have at least two mutually parallel glass panes (2), wherein a filler layer, in particular an alkali metal silicate layer, (3) which foams in the case of fire is arranged at least in regions between the glass panes (2),
the glass packets (1) are joined by means of a non-combustible, transparent, organic adhesive as joining layer (4) and
the joining layer (4) is in the form of a UV-curing adhesive.

2. Fire protection glazing according to Claim 1, **characterized in that** the joining layer (4) is arranged between two glass panes (2) of the adhesively bonded glass packets (1) which at the ends are at a distance from one another in a mutually parallel manner and
**in that** the layer thickness of the joining layer is from 0.3 mm to 3 mm.

3. Fire protection glazing according to Claim 2, **characterized in that** the layer thickness of the joining layer is from 0.5 mm to 0.8 mm.

4. Fire protection glazing according to any of Claims 1 to 3, **characterized in that** a functional layer (5) is arranged between at least two of the glass panes (2).

5. Fire protection glazing according to Claim 4, **characterized in that** the functional layer (5) is formed by a pane composed of chemically or thermally prestressed glass, a pane composed of glass-ceramic and/or by organic polymers.

6. Fire protection glazing according to Claim 4 or 5, **characterized in that** the functional layer (5) is adhesively bonded into the joining layer (4).

7. Fire protection glazing according to any of Claims 1 to 6, **characterized in that** the joining layer (4) consists of organic polymers for which the decomposition and carbonization process dominates in the case of fire.

8. Fire protection glazing according to any of Claims 1 to 7, **characterized in that** the filler layers (3) comprise Na silicates and/or K silicates and/or Li silicates.

9. Fire protection glazing according to any of Claims 1 to 8, **characterized in that** the filler layers (3) contain SiO₂ and alkali metal oxide and
**in that** the ratio of SiO₂ to alkali metal oxide is in the range from 1:1 to 5:1.

10. Fire protection glazing according to any of Claims 1 to 9, **characterized in that** the filler layers (3) comprise up to a maximum of 30% by weight of polyhydric alcohols and/or various types of sugars.

11. Fire protection glazing according to any of Claims 1 to 10, **characterized in that** the filler layers (3) have a water content of from 10% by weight to 35% by weight.

12. Fire protection glazing according to any of Claims 1 to 11, **characterized in that** the thickness of the filler layers (3) is from 0.3 mm to 5 mm.

13. Fire protection glazing according to any of Claims 1 to 12, **characterized in that** the thickness of the glass panes (2) is in the range from 2.3 mm to 5 mm.

## Revendications

1. Vitrage coupe-feu comportant au moins deux paquets de verre (1) qui comportent chacun au moins deux feuilles de verre (2) parallèles entre elles, entre les feuilles de verre (2) étant disposée au moins par zones une couche de remplissage moussant en cas d'incendie, en particulier une couche de silicate de métal alcalin (3),
les paquets de verre (1) étant assemblés avec une colle organique incombustible, transparente, en tant que couche d'assemblage (4), et
la couche d'assemblage (4) étant conçue en tant que colle durcissant aux UV.

2. Vitrage coupe-feu selon la revendication 1, **caractérisé en ce que**
la couche d'assemblage (4) est disposée entre deux feuilles de verre (2) espacées parallèlement entre elles aux extrémités des paquets de verre (1) collés l'un à l'autre, et
l'épaisseur de couche de la couche d'assemblage valant de 0,3 mm à 3 mm.

3. Vitrage coupe-feu selon la revendication 2, **caractérisé en ce que**
l'épaisseur de couche de la couche d'assemblage vaut de 0,5 mm à 0,8 mm.

4. Vitrage coupe-feu selon l'une quelconque des revendications 1 à 3,
**caractérisé en ce**
**qu'**entre au moins deux des feuilles de verre (2) est disposée une couche fonctionnelle (5).

5. Vitrage coupe-feu selon la revendication 4,
**caractérisé en ce que**
la couche fonctionnelle (5) est constituée d'une feuille de verre trempé thermiquement ou chimiquement, d'une feuille de vitrocéramique et/ou de polymères organiques.

6. Vitrage coupe-feu selon la revendication 4 ou 5,
**caractérisé en ce que**
la couche fonctionnelle (5) est incorporée dans la couche d'assemblage (4).

7. Vitrage coupe-feu selon l'une quelconque des revendications 1 à 6,
**caractérisé en ce que**
la couche d'assemblage (4) est constituée de polymères organiques dans lesquels le processus de décomposition et de carbonisation domine en cas d'incendie.

8. Vitrage coupe-feu selon l'une quelconque des revendications 1 à 7,
**caractérisé en ce que**
les couches de remplissage (3) comportent des silicates de Na et/ou des silicates de K et/ou des silicates de Li.

9. Vitrage coupe-feu selon l'une quelconque des revendications 1 à 8,
**caractérisé en ce que**
les couches de remplissages (3) contiennent du SiO₂ et un oxyde de métal alcalin, et
**en ce que** le rapport de SiO₂ à l'oxyde de métal alcalin est compris entre 1:1 et 5:1.

10. Vitrage coupe-feu selon l'une quelconque des revendications 1 à 9,
**caractérisé en ce que**
les couches de remplissage (3) comportent à raison d'au maximum 30 % en poids des alcools polyhydriques et/ou divers types de sucres.

11. Vitrage coupe-feu selon l'une quelconque des revendications 1 à 10,
**caractérisé en ce que**
les couches de remplissage (3) présentent une teneur en eau de 10 % en poids à 35 % en poids.

12. Vitrage coupe-feu selon l'une quelconque des revendications 1 à 11,
**caractérisé en ce que**
l'épaisseur des couches de remplissage (3) vaut de 0,3 mm à 5 mm.

13. Vitrage coupe-feu selon l'une quelconque des revendications 1 à 12,
**caractérisé en ce que**
l'épaisseur des feuilles de verre (2) est comprise entre 2,3 mm et 5 mm.
